# EUROPEAN PATENT APPLICATION

(11) **EP 4 610 643 A1**
(43) Date of publication of application: **03.09.2025**
(21) Application number: 22963504.0
(22) Date of filing: 27.10.2022
(51) Int. Cl.: G01N 27/447

(54) **ELECTROPHORESIS CASSETTE AND ELECTROPHORESIS METHOD**

(71) Applicant: HITACHI HIGH-TECH CORPORATION, Tokyo 105-6409 (JP)
(72) Inventor: OGAWA, Mima, Tokyo 100-8280 (JP); YOKOI, Takahide, Tokyo 100-8280 (JP)
(74) Representative: MERH-IP Matias Erny Reichl Hoffmann Patentanwälte PartG mbB
(86) International application number: PCT/JP2022/040252
(87) International publication number: WO 2024/089857

(57) **Abstract**

A well can be formed without a comb, a gel that is highly convenient and has a high degree of freedom can be used, and deterioration in the sample separating performance due to swelling of the gel is prevented. An electrophoresis cassette 1 includes a gel tank **2,** a gel 7 stored in the gel tank 2, a buffer solution tank 3 continuous with the gel tank 2 and into which a buffer solution is introduced, a sample (target biological substance) that is electrophoresed in the gel 7 being injected into the buffer solution, and an oil 8 in contact with the gel 7 in the gel tank **2.** The gel 7 and the oil 8 are pre-packaged in the electrophoresis cassette 1.

## Description

### Technical Field

The present disclosure relates to an electrophoresis cassette and an electrophoresis method, and to an electrophoresis cassette in which a gel is pre-packaged and an electrophoresis method using the electrophoresis cassette.

### Background Art

There is known a gel electrophoresis method for analyzing a biological substance such as nucleic acid and protein by utilizing a phenomenon of a charged substance subjected to an electric field moving toward a reversed polarity electrode. Generally, an electrophoresis gel such as an agarose gel and an acrylamide gel is used as a support body of a biological substance. Since the moving speed in the electrophoresis gel depends on the molecular weight of each biological substance, biological substances are separated into different bands by their molecular weights. The gel electrophoresis method has high resolution in separating biological substances and is used also for measurement of the length of a DNA fragment to grasp the state of a specimen. The gel electrophoresis method is also used for quantification of DNA of a specific length by fluorescently labeling the DNA and observing the brightness of the DNA.

Usually, the electrophoresis gel is prepared immediately before electrophoresis and is used. To prepare the electrophoresis gel, dissolution of a gel is necessary for an agarose gel and adjustment and degassing are necessary for a polyacrylamide gel, which disadvantageously require a lot of effort.

As a pre-packaged polyacrylamide gel that requires no preparation of the electrophoresis gel and is ready for electrophoresis, for example, PTLs 1 and 2 disclose a method of forming a gel between glass plates, called a slab gel, and storing the gel using a buffer solution having a low pH.

PTL 3 discloses an electrophoresis apparatus in which a fluorescent pigment is added to an already prepared pre-packaged gel to eliminate the need of fluorescent-staining of a sample.

PTL 4 discloses an electrophoresis cassette in which a gel and a buffer solution are pre-packaged.

### Citation List

### Patent Literatures

PTL 1: US 7,422,670 B
PTL 2: US 6,783,651 B
PTL 3: US 8,562,802 B
PTL 4: US 8,591,713 B

### Summary of Invention

### Technical Problem

A pre-packaged gel needs to have a structure called a well to receive a sample, and disadvantageously has restriction to maintain the structure.

In many pre-packaged gels, a resin plate called a comb is inserted into the gel. The comb is pulled out before using the gel, and a sample is poured into a well formed by the comb to use the gel (PTLs 1, 2 and 3). To use a cassette including the pre-packaged gel, an electrophoresis automation device needs to be provided with a comb removal mechanism. Alternatively, when the comb is to be removed manually by an operator before using the electrophoresis automation device, the well is exposed in the device for a certain period of time until the start of electrophoresis, and thus contamination or drying of a buffer solution unit may occur.

PTL 4 discloses an electrophoresis cassette in which a buffer solution in contact with a gel is pre-packaged and a well is held without a comb, but the gel composition is limited to a cross-linked gel to prevent swelling of the gel while being stored. Among the cross-linked gels, a cross-linked gel that has a composition that does not swell much needs to be selected. To prevent swelling and shrinkage caused by an osmotic pressure difference, the buffer solution and the gel need to have the same or close salt concentration.

An object of the present disclosure is to provide an electrophoresis cassette and an electrophoresis method capable of forming a well without a comb, allowing use of a gel that is highly convenient has and a high degree of freedom, and capable of preventing deterioration in the sample separating performance due to swelling of the gel.

### Solution to Problem

To solve the above problems, an electrophoresis cassette of the present disclosure includes a gel tank for storing a gel, and a buffer solution tank continuous with the gel tank and into which a buffer solution is introduced, a sample to be electrophoresed in the gel being injected into the buffer solution, and the gel and oil in contact with the gel are pre-packaged.

To solve the problems described above, an electrophoresis method according to the present disclosure includes preparing an electrophoresis cassette including a gel tank for storing a gel and a buffer solution tank continuous with the gel tank and into which a buffer solution is introduced, a sample to be electrophoresed in the gel being injected into the buffer solution, the gel and oil in contact with the gel being pre-packaged in the electrophoresis cassette, introducing the buffer solution into the buffer solution tank of the electrophoresis cassette to separate the oil from the gel, injecting the sample into the buffer solution introduced into the buffer solution tank, and applying an electric field to the sample to perform electrophoresis on the sample in the gel.

### Advantageous Effects of Invention

According to an electrophoresis cassette and an electrophoresis method according to the present disclosure, a well can be formed without a comb, a gel that is highly convenient and has a high degree of freedom can be used, and deterioration in the sample separating performance due to swelling of the gel can be prevented.

### Brief Description of Drawings

FIG. 1 is a front view of an electrophoresis cassette according to an embodiment.
FIG. 2 is a cross-sectional view of the electrophoresis cassette according to the embodiment.
FIG. 3 is a graph describing a result of a gel swelling experiment in which a buffer solution according to a comparative example is layered.
FIG. 4 is a graph describing a result of a gel swelling experiment in which an oil according to a first example is layered.
FIG. 5 is a diagram showing electrophoresis images according to a second example.

### Description of Embodiments

In all the drawings for describing the present embodiment, components having the same function are denoted by the same reference sign, and repeated description thereof may be omitted. The present invention is not to be construed as being limited to the description of the embodiments described below. The present invention is defined by the appended claims, and it is easily understood by those skilled in the art that the specific configuration thereof can be altered without departing from the spirit and gist of the present invention.

Positions, sizes, shapes, ranges and the like of configurations illustrated in the drawings may not represent actual positions, sizes, shapes, ranges and the like. This is for facilitating understanding of the invention. Thus, the present invention is not necessarily limited to positions, sizes, shapes, and ranges, for example, disclosed in the drawings.

Components singularly expressed in the specification may be plural unless clearly expressed in the context.

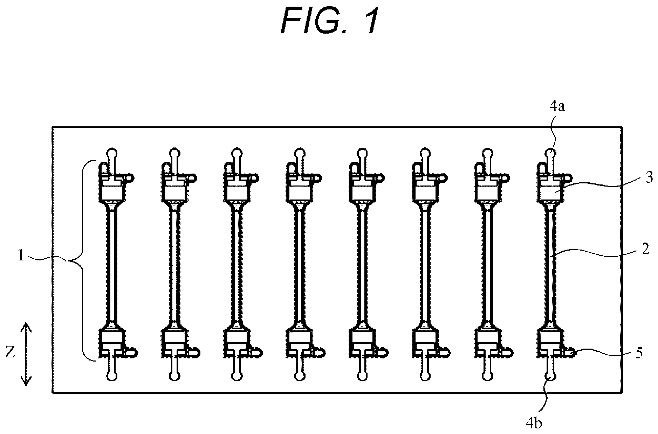

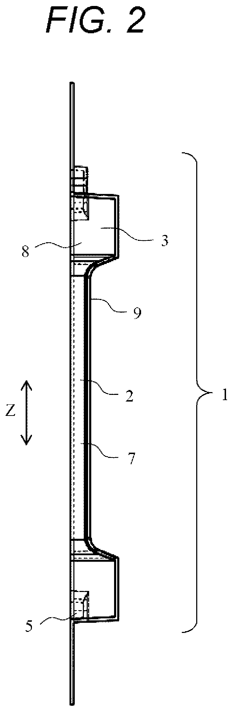

An electrophoresis cassette 1 according to an embodiment of the present disclosure will be described with reference to FIGS. 1 and 2. FIGS. 1 and 2 are drawings illustrating a configuration of the electrophoresis cassette 1 according to the embodiment. In the example in FIG. 2, a support body 9 covering a gel 7 is provided. The support body 9 is electrically resistive (including those having insulating property and those having high electric resistance (including not only perfect insulators but also those having some electric conductivity)).

The electrophoresis cassette 1 includes an upper electrode 4a and a lower electrode 4b for applying a voltage. Although not illustrated, a power source is connected to the upper electrode 4a and the lower electrode 4b to apply a voltage across a pair of the electrodes 4a and 4b. Although not illustrated, a voltage control device that controls an operation of the power source may be connected to the power source.

In the following, description will be made for a case where a sample to be collected (target biological substance) is a nucleic acid.

The gel 7 is a separation medium used for separating a target biological substance from an unnecessary substance. As the gel 7, for example, a known gel such as agarose gel or polyacrylamide gel can be used. The thickness of the gel 7 is not particularly limited, but is preferably 0.5 to 18 mm from the viewpoint of giving a sharp visuality of a band of the biological substance obtained by electrophoresis. The thickness of the gel 7 may not be constant.

The electrophoresis cassette 1 includes a gel tank 2 for storing the gel **7.** The gel tank 2 is provided with an injection port 5 for injecting the gel **7.** The gel 7 is pre-packaged in the gel tank **2.**

The electrophoresis cassette 1 includes a buffer solution tank 3 for storing a buffer solution into which a sample (target biological substance) to be electrophoresed in the gel 7 is injected. The buffer solution tank 3 is continuous with the gel tank 2. The internal space of the buffer solution tank 3 and the internal space of the gel tank 2 are connected to be spatially continuous. Immediately before performing electrophoresis, the buffer solution is injected into the buffer solution tank 3. The buffer solution is not pre-packaged.

An oil 8 is in contact with the gel 7 stored in the gel tank 2. The oil 8 is pre-packaged in the buffer solution tank 3. The oil 8 is a liquid that phase-separates from water or the gel 7, and may be, for example, a non-polar solvent, a low-polarity solvent, or a lipid. The oil 8 may be benzene or toluene. The interfacial tension between the oil 8 and water or the gel 7 is such that the phase separation state is maintained, and may be, for example, 10 mN/m or more. The surface tension of the oil 8 can be set to, for example, 10 mN/m. The interfacial tension between water or the gel 7 and the oil 8 can be set smaller than the surface tension of the oil 8.

The oil 8 has a smaller specific gravity than the buffer solution. This allows readily forming an interface between the buffer solution and the gel 7 when performing electrophoresis.

The support body 9 is formed of resin or the like. By providing an opening to the buffer solution tank 3 or separately providing a piercing mechanism, a sample containing a target biological substance to be separated can be injected into the buffer solution tank 3. In the present embodiment, an opening is formed at one end of the buffer solution tank 3 or near the one end of the buffer solution tank 3 to introduce a sample toward the upper surface.

The target biological substance is injected into the buffer solution tank 3 as an injection liquid in which a liquid having a larger specific gravity than the buffer solution is mixed. Examples of the solvent in which the target biological substance is mixed include glycerol aqueous solution and sugar water. When the solvent is a glycerol aqueous solution, the glycerol concentration may be, for example, 6%. The viscosity of the injection liquid may be, for example, 1 mPa·s.

The distance between the buffer solution tank 3 and the lower electrode 4 can be set arbitrarily. This distance can be designed appropriately according to the composition of the gel 7 (for example, gel concentration), the molecular weight of the target biological substance, and the like.

In the present embodiment, the gel tank 2 and the buffer solution tank 3 have a substantially rectangular parallelepiped, but the structure, shape, size, and the like of the gel tank 2 and the buffer solution tank 3 are not limited to those illustrated in the drawings. The structure, shape, size, and the like of the gel tank 2 and the buffer solution tank 3 can be set arbitrarily. The gel tank 2 and the buffer solution tank 3 may have the same or different width dimensions (that is, the dimension in the horizontal direction orthogonal to the direction of the electric field, not illustrated in FIG. 2).

In the present embodiment, the direction of migration of the biological substance is the vertical direction (Z direction in the drawing), and the gel tank 2 and the buffer solution tank 3 are disposed to be continuous in the vertical direction. However, the direction of migration is not limited to the vertical direction.

### (Electrophoresis Method)

Next, an electrophoresis method using the electrophoresis cassette 1 described above will be described.

First, the electrophoresis cassette 1 is prepared. The electrophoresis cassette 1 includes the gel tank **2,** the gel 7 stored in the gel tank 2, the buffer solution tank 3 continuous with the gel tank 2 and into which the buffer solution into which a sample that is electrophoresed in the gel 7 is injected is introduced, and the oil 8 in contact with the gel 7 in the gel tank 2. The gel 7 and the oil 8 are pre-packaged in the electrophoresis cassette 1.

Next, the buffer solution is introduced into the buffer solution tank 3 of the electrophoresis cassette 1 to separate the oil 8 from the gel 7.

Then, the sample is injected into the buffer solution introduced into the buffer solution tank 3.

Finally, an electric field is applied to the sample, and the sample is electrophoresed in the gel 7.

### (Comparative Example)

A comparative example will be described below.

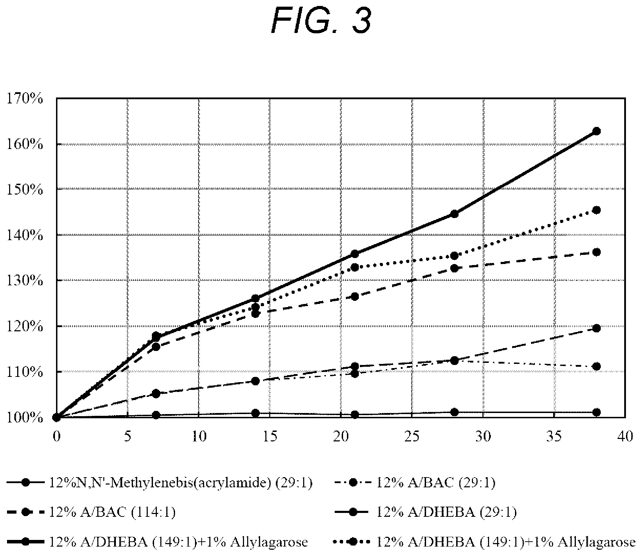

Acrylamide and a cross-linker were prepared to have a total monomer amount of 12% (w/v) and polymerized in a 2 mL tube to form a gel. Tris Glycine was used as a buffer solution. As the cross-linker, methylene bisacrylamide, dihydroethylene bisacrylamide, and bisacryloyl cystamine were used in a weight ratio described in FIG. 3. Tris Glycine buffer solution having the same concentration was injected by the same amount onto the gel.

The buffer solution was removed by decantation every few days, and the weight of the gel was measured. After measurement, the buffer solution removed by decantation was returned to the original tube to be stored again. This process was repeated until 38 days after.

The results are shown in FIG. **3****.** The graph is plotted by the weight swelling ratio (of an initial value of 100%) with respect to time. The graph shows that the swelling amount is higher for a smaller ratio of the cross-linker.

### (First Example)

Next, a first example will be described.

A gel layer was prepared in the same manner as in the comparative example, and then oil or a buffer solution was poured into a tube to evaluate the weight swelling ratio. The gel was prepared to have acrylamide and a cross-linker with a total monomer amount of 12% (w/v). The cross-linker having dihydroethylene bisacrylamide and an acrylamide of a weight ratio of 149:1 was used. As a buffer solution, Tris Glycine adjusted to a pH of 9.5 or Bis-Tris Tricine BES adjusted to a pH of 6.9 was used. As an oil, mineral oil, silicon oil, or toluene was used.

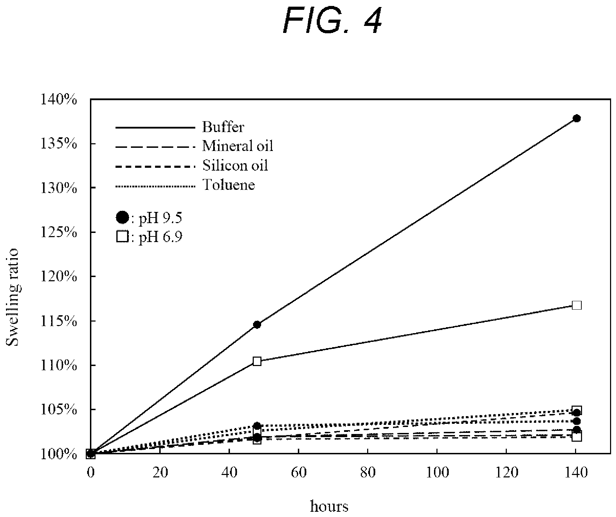

The results are shown in FIG. 4. When the buffer solution was injected into the tube, swelling by 15% to 35% occurred in six days, whereas when the oil was injected into the tube, the swelling ratio was 5% or less in six days.

### (Second Example)

Next, a second example will be described.

Acrylamide and a cross-linker were prepared to have a total monomer amount of 12% (w/v) and a gel was polymerized in a support body that is a channel formed in a thin PET plate. As a cross-linker, dihydroethylene bisacrylamide of an amount of 6% (w/w) of the amount of acrylamide was used. Tris Glycine was used as a buffer solution. A buffer solution or oil was injected into a buffer solution tank above the gel, stored at 37°C for four days, and then electrophoresed. 100 bp Ladder was used as a migration sample.

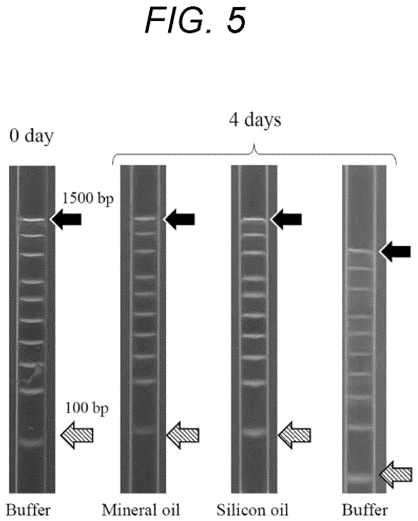

Migration images are shown in FIG. 5. The migration speed after four days after injection of the buffer solution (4 days, Bubbfer) was higher than the migration speed immediately after injection of the buffer solution (0 days, Bubbfer) due to enlarging of pores in the gel, whereas the migration state after four days after injection of the oil (4 days, Mineral oil and Silicon oil) was almost the same as the migration state immediately after injection of the buffer solution (0 days, Bubbfer).

### (Effects of Embodiment)

In the present embodiment, the gel 7 is pre-packaged in the gel tank 2 and the oil 8 in contact with the gel 7 in the gel tank 2 is pre-packaged, which enables forming of a well without a comb. Accordingly, there is no need to mount a comb removal mechanism. Since the gel 7 and the oil 8 are pre-packaged, contamination and drying of the buffer solution unit can be prevented.

In the present embodiment, since the composition of the gel 7 for preventing swelling of the gel 7 is not limited, the gel 7 that is highly convenient and having a high degree of freedom can be used.

In the present embodiment, providing the oil 8 in contact with the gel 7 prevents deterioration in the sample separating performance due to swelling of the gel **7.**

In the present embodiment, injection of the buffer solution to be made immediately before electrophoresis can be performed easily because the injection is the same pipetting operation as that of the injection liquid (mixed liquid of the sample and the solvent).

In the present embodiment, when using the electrophoresis cassette 1, the buffer solution is injected into the buffer solution tank 3, and the oil 8 comes above the buffer solution since the oil 8 has a lower specific gravity than the buffer solution, whereby an interface is formed between the gel 7 and the buffer solution, and electrophoresis can be performed.

In the present embodiment, since the buffer solution is injected immediately before electrophoresis, a great difference in the salt concentration between the gel 7 and the buffer solution can be established, and the band can be concentrated by the difference in conductivity between the buffer solution and the gel 7 to improve the separation performance.

Note that the present invention is not limited to the embodiments described above, and includes various exemplary modifications. For example, the embodiments described above are described in detail for easy understanding of the present disclosure. The present invention is not necessarily limited to embodiments including all the described configurations. A part of a configuration of an embodiment may be eliminated or replaced, or a different configuration may be added to the part.

### Reference Signs List

- 1: electrophoresis cassette
- 2: gel tank
- 3: buffer solution tank
- 4a: electrode
- 4b: electrode
- 5: injection port
- 7: gel
- 8: oil
- 9: support body

## Claims

1. An electrophoresis cassette comprising:
a gel tank for storing a gel; and
a buffer solution tank continuous with the gel tank and into which a buffer solution is introduced, a sample to be electrophoresed in the gel being injected into the buffer solution,
wherein the gel and oil in contact with the gel are pre-packaged.

2. The electrophoresis cassette according to claim 1, wherein an interfacial tension between the gel and the oil is 10 mN/m or more.

3. The electrophoresis cassette according to claim 1, wherein a surface tension of the oil is 10 mN/m or more.

4. The electrophoresis cassette according to claim 1, wherein an interfacial tension between the gel and the oil is smaller than a surface tension of the oil.

5. The electrophoresis cassette according to claim 1, wherein the oil has a lower specific gravity than the buffer solution.

6. The electrophoresis cassette according to claim 1, wherein the oil is a liquid that phase-separates from the gel.

7. The electrophoresis cassette according to claim 1, wherein the oil is a non-polar solvent or a low-polarity solvent.

8. The electrophoresis cassette according to claim 1, wherein the oil is a lipid.

9. An electrophoresis method comprising:
preparing an electrophoresis cassette including a gel tank for storing a gel and a buffer solution tank continuous with the gel tank and into which a buffer solution is introduced, a sample to be electrophoresed in the gel being injected into the buffer solution, the gel and oil in contact with the gel being pre-packaged in the electrophoresis cassette;
introducing the buffer solution into the buffer solution tank of the electrophoresis cassette to separate the oil from the gel;
injecting the sample into the buffer solution introduced into the buffer solution tank; and
applying an electric field to the sample to perform electrophoresis on the sample in the gel.
